# EUROPEAN PATENT APPLICATION

(11) **EP 3 957 207 A1**
(43) Date of publication of application: **23.02.2022**
(21) Application number: 20191347.2
(22) Date of filing: 17.08.2020
(51) Int. Cl.: A46B 15/00, A61C 17/02, G06F 13/38

(54) **AN ORAL CARE SYSTEM FOR ADDING A SENSOR FUNCTIONALITY TO THE ORAL CARE SYSTEM**

(71) Applicant: Koninklijke Philips N.V., 5656 AG Eindhoven (NL)
(72) Inventor: GERHARDT, Lutz Christian, 5656 AE Eindhoven (NL); TE VELDE, Mart Kornelis-Jan, 5656 AE Eindhoven (NL); JOHNSON, Mark Thomas, 5656 AE Eindhoven (NL)
(74) Representative: Philips Intellectual Property & Standards

(57) **Abstract**

The invention is directed to an oral care system (100) configured to allow an addition of a sensor functionality to the oral care system (100), the oral care system (100) comprising:
a data reader (102) for receiving a code (200),
a programmable controller (104),
wherein the oral care system (100) is configured for triggering a software reconfiguration of a software associated with at least one hardware component (106) of the oral care system (100) based on the code (200) received by the data reader (102),
wherein the programmable controller (104) is configured for changing a control of the hardware component (106) of the oral care system (100) based on the triggered software reconfiguration, and
wherein the change of the control of the hardware component (106) of the oral care system (100) causes an addition of a sensor functionality to the hardware component (106) of the oral care system (100).

## Description

### FIELD OF THE INVENTION

The invention is directed to an oral care system configured to allow an addition of a sensor functionality, a support unit for an oral cleaning tool, and a method for adding a sensor functionality to an oral care system and a computer program.

### BACKGROUND OF THE INVENTION

In the field of toothbrushes and flossing devices for oral cavities, interconnected devices become more and more important. However, these connected ecosystems are often difficult to handle for a user of the oral care system without specific knowledge.

The inventors of the present invention have identified several useful situations where an extra sensor functionality can be provided in a toothbrush without changing the hardware of the brush. However, this might require a software update. They have also identified that it is currently impossible for consumers to do such an update and personalize and/or customize e.g. their brushing and flossing experience by using a toothbrush user interface (UI). The inventors thus identified the need for an improved oral care system.

### SUMMARY OF THE INVENTION

With embodiments of the invention, an improved oral care system is provided, which is configured to allow an addition of a sensor functionality to the oral care system.

The present invention is defined by the independent claims. Further embodiment and advantages of the present invention are incorporated in the dependent claims and the description.

Technical terms are used hereinafter in their common sense. If a specific meaning is conveyed to certain terms, a definition of terms will be given in the following in which the terms are used.

According to a first aspect of the invention, an oral care system is configured to allow an addition of a sensor functionality to the oral care system. The oral care system comprises a data reader for receiving a code. Furthermore, the oral care system comprises a programmable controller. Moreover, the oral care system is configured for triggering a software reconfiguration of a software associated with at least one hardware component of the oral care system based on the code received by the data reader. In addition, the programmable controller is configured for changing a control of the hardware component of the oral care system based on the triggered software reconfiguration. Moreover, the change of the control of the hardware component of the oral care system causes an addition of a sensor functionality to the hardware component of the oral care system.

The advantage of this aspect is that with the oral care system an additional sensor functionality can be added to the oral care system or a hardware component of the oral care system and thereby, the oral care procedure performed by the oral care system can be improved which can lead to an improved personalized user experience, an increase of usability for a user of the oral care system, and enhanced user engagement to the device. It should be noted that the present invention could enable a variety of business models and business schemes, which may generate additional revenue for producers of oral care systems. This benefit of the present invention will be elucidated in the context of exemplary embodiments in the following disclosure.

Many different sensor functionalities and many different hardware components can be used for implementing the present invention as will be explained in more detail. A detailed non-limiting example is elucidated now.

For example, the oral care system may comprise a flossing unit for flossing teeth and a sensor unit in a flossing conduit of the handle for measuring the pressure of the flossing fluid. Moreover, by adding the sensor functionality of measuring also the parameter of the flow of the flossing fluid by this sensor of the oral care system, an interproximal space between two teeth can be identified. The identified interproximal space can be used by the programmable controller of the oral care system for adapting the flossing procedure in a way that the flossing is directed more to the interdental space of the teeth and less to gum tissue of the user of the oral care system, thereby increasing the desired effectiveness of the device and usability.

It must be noted that there are at least three general embodiments how this caused addition of a sensor functionality can be embodied, as will become apparent form the following disclosure. In a first general embodiment, a sensor is already present in the oral care system, but is not used before the reconfiguration as described herein. Thus, this sensor is activated in this embodiment. The simplest example is probably a passive responsive material based element (in e.g. a mouthpiece or a brush head) that is wired (but not used before the software update) and then activated and repurposed to a sensor, e.g. to perform brushing pressure/force measurements. In a second general embodiment, the caused addition of a sensor functionality is a transformation of existing hardware of the oral care system into a sensor. For example, when one thinks about what kind of hardware would allow the addition of a sensor functionality, e.g. a piezo, an electroactive polymer, or a responsive material in general could be used. As is understood by the skilled reader a piezo, an electroactive polymer, or a responsive material can be driven, but can also be read out as a sensor. In other words, in this embodiment an actuator is now also used as a sensor due to the software reconfiguration. In a third general embodiment said caused addition of a sensor functionality is the addition of a second sensor functionality/mode to an existing sensor of the oral care system. This will be described in more detail hereinafter.

As was described before, the change of the control of the hardware component of the oral care system causes an addition of a sensor functionality to the hardware component of the oral care system. In general, the additional sensor functionality can be used for enabling further data analysis on already generated data and/or on newly generated data that are produced by means of this new sensor functionality.

The oral care system of the present invention can be configured to allow, trigger and/or initiate the addition of a sensor functionality of the oral care system. An addition of the sensor functionality can be understood as an extension of one or more sensor functionalities of an already existing sensor and/or as an addition of a sensor functionality to one or more hardware components of the oral care system, which had not a sensor functionality before. Moreover, the addition of a sensor functionality can be a change and/or widening of the measurement range of a sensor. The addition of one or more sensor functionalities to hardware components of the oral care system will be explained in more detail hereinafter. The sensor functionality can be described in this context as the capability to monitor and/or supervise a (device) function, e.g. a flossing function, of the oral care system by generating measuring data of said function. In addition, the sensor functionality shall be understood to comprise the capability of measuring a physiological condition, e.g. an inflamed or perfused gum, in the oral cavity and/or of a tooth of the user. Furthermore, the sensor functionality added by the present invention can be embodied as a measurement of a physical parameter associated with the oral cavity, a tooth and/or with the fluid mechanics of the oral care system, e.g. a fluid pressure in the jetting tube, of the oral care system. A physical parameter may be also associated with a spatial relation of a mouthpiece and a tooth, e.g. an angle between a cleaning element of the oral care system and a tooth of the user.

In the context of the present invention, the term "mouthpiece" shall be understood as a device that receives at least a part of or an entire dental arch. Moreover, the "support unit" of a mouthpiece is the reusable part of the mouthpiece typically comprising the drive mechanism. Unless the mouthpiece is to be replaced completely upon wear-out, the reusable part is to be coupled to a replaceable cleaning part, e.g. comprising bristles. Thus, a reusable mouthpiece is configured for being coupled to a replaceable cleaning part, e.g. comprising bristles. The "support unit" of a handheld oral care system is understood herein as a handle.

In the context of the present invention, the hardware component can be any element, which is capable of measuring a parameter associated with the oral care procedure performed by the oral care system and/or with the oral care system. The hardware component can be especially a sensor device, a mechanical and/or fluid actuator and/or any component of a drive train for the oral care system. In the embodiment explained herein before in detail, the oral care system comprises a flossing unit for flossing teeth and a sensor unit in a flossing conduit of the handle for measuring the fluid pressure or (flow rate) of the flossing fluid. By adding the sensor functionality of measuring also the parameter of the flow of the flossing fluid by this sensor of the oral care system, an interproximal space between two teeth can be identified or an occlusal surface (biting surface) if the characteristic pressure or flow signature does not change over a typical distance representative for the width of a tooth.

The data reader used in the context of the present invention shall be understood as an element, which is configured for reading out the code. The data reader can be specifically adapted for the code. In the case, the code is e.g. a QR-tag, the data reader can be embodied as a camera, which can scan the QR-tag. In a further example, the data reader can be an RFID reader, wherein this type of exemplary data reader can read out codes, which are stored on RFID transponders. Many more implementations of the data reader are of course possible (e.g. bar code, scratch code on the packaging of the oral care device or components thereof), without departing from the present invention.

The code shall be understood in the context of the present invention as a label or any other form of physical element, which stores or provides information for adding a sensor functionality to the oral care system. In one exemplary embodiment a data storage located inside of a replaceable hardware component of the oral care system can store or provide the code. In this embodiment the code comprises instructions and/or a certificate for adding a sensor functionality to the oral care system.

In a further example, the code can comprise only a link to the instructions for adding a sensor functionality. In an example, the oral care system comprises a smartphone besides a handle and a brushing head. The smartphone can be configured for receiving the code via Bluetooth, wherein the code comprises the instruction to download the information for adding a sensor functionality to the oral care system from the internet or a web server onto the smartphone. The smartphone can then transfer the information for adding a sensor functionality to the programmable controller, which triggers the software reconfiguration based on the received information.

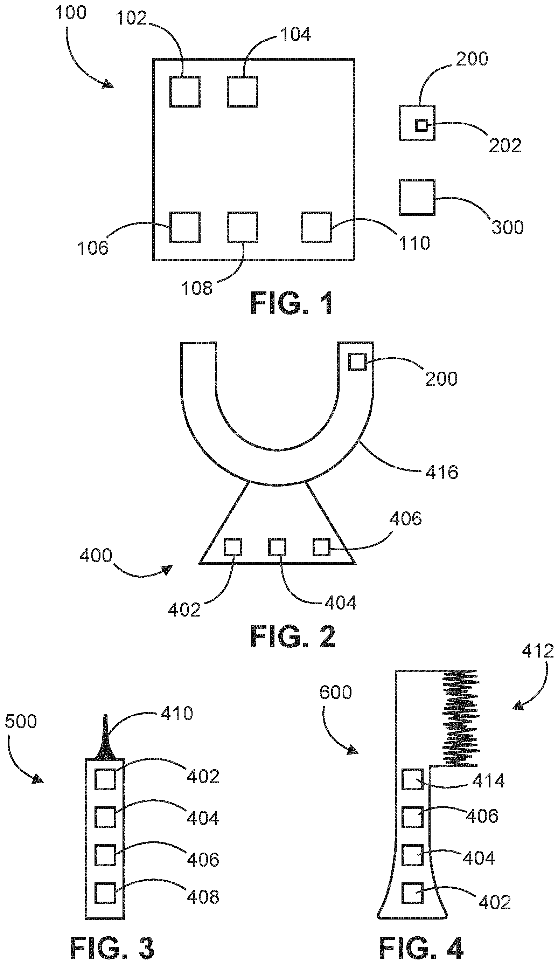

As mentioned before, the oral care system comprises a programmable controller. The programmable controller may comprise a processor and/or a storing unit for executing the software and/or the software reconfiguration as described herein. The programmable controller can be linked to several actuators of the oral care system, e.g. a mechanical or a fluid actuator. By linking the programmable controller to the several actuators, the programmable controller can be capable of adapting a performance of the actuators of the oral care system. The adaption of the performance of the actuators can be based on data generated by the additional sensor functionality of the oral care system. This will be explained in more detail in view of Figure 4 and the corresponding Figure description.

Furthermore, the oral care system is configured, based on the code received by the data reader, for triggering, starting and/or initiating a software reconfiguration, of a software associated with and/or running on at least one hardware component of the oral care system. The software reconfiguration can be an update of the software associated with the hardware component, an extension of the software associated with the hardware component, and/or a replacement of the software associated with the hardware component. The term "associated" may be understood in the context of the present invention as storing the software on the hardware component or as storing the software on a remote computer data storage and establishing a connection between the remote computer data storage and the hardware component for controlling the hardware component of the oral care system.

As mentioned before, the programmable controller is configured for changing, adapting and/or altering a control of the hardware component of the oral care system based on the triggered software reconfiguration. The change of the control of the hardware component can be an activation and/or deactivation of a sensor functionality of the hardware component, an adaption of a parameter of the hardware component, e.g. an adaption of a flossing rate or cycle, and/or a change of a processing scheme of the hardware component, e.g. a switch from a brushing procedure to a flossing procedure.

Moreover, the change of the control of the hardware component of the oral care system causes, generates and/or implies an addition of a sensor functionality to said hardware component of the oral care system. The addition of the sensor functionality can be an unlocking of a sensor functionality, which was inactivated before and is activated due to the addition of the sensor functionality, what will be described in more detail herein after. The addition of the sensor functionality can be understood as a provision of a sensor functionality to a hardware component, which had not a sensor functionality before. This will be explained in more detail hereinafter.

In another concrete example, a user of the oral care system buys a replacement brush head for the oral care system. The replacement brush head comprises the code, e.g. a RFID transponder. The user can then attach the replacement brush head to the oral care system. The data reader can read out the code contained in the replacement brush head. The code can be also located on a covering box of the replacement brush head.

In another example, the code comprises information, which triggers the oral care system to establish a connection to an online database, which stores all information necessary for triggering and performing the software reconfiguration. Based on the received code and/or the downloaded information indicative for the code, the programmable controller triggers a software reconfiguration, e.g. a software update of the currently installed software, which is used to operate the oral care system and/or a hardware component of the oral care system, e.g. a fluid actuator. The software reconfiguration changes the control of the hardware component of the oral care system or the oral care system and thereby adds a sensor functionality to the oral care system, for example, a further sensor function, e.g. measuring the flossing pressure, to the hardware component of the oral care system.

It must be noted that in the context of the present invention the term "online database" shall be understood broadly and comprises an internet database. Alternatively, the term "online database" comprises a database stored in an accessory of the oral care system, e.g. smartphone app to which a component of the oral care system, like e.g. the handle connects. Said smartphone app then comprises the database. This is explicitly comprised when an "online database" is described in the context of the present invention.

Further examples of the addition of the sensor functionality are further explained in the context of exemplary embodiments hereinafter and in the context of Figure 1 and the corresponding description.

According to a further embodiment, the addition of the sensor functionality to the hardware component is an implementation of a sensor functionality that is added to an already existing sensor functionality of the hardware component of the oral care system.

This embodiment can have the advantage that by adding a further sensor functionality to an already existing sensor functionality, the efficiency and cleaning result of the oral care procedure performed by the oral care system can be further improved.

Moreover, the addition of the sensor functionality to the hardware component shall be understood in the context of the present invention as an implementation of a sensor functionality that is added, enlarged and/or built up in addition to an already existing sensor functionality. An already existing sensor functionality shall be understood in this context as a sensor function, which already existed before the software reconfiguration of the hardware component of the oral care system has been performed. The added further sensor functionality can be a measurement of flow and/or pressure in a conduit of a flossing unit and/or a measurement of electrical resistance between electrodes, thereby identifying an occlusal surface of a tooth and of course, many further sensors without departing from the present invention.

A further example of adding a sensor functionality to an already existing sensor functionality can be that an already existing sensor measures a first parameter, e.g. a flow of a flossing fluid, of the oral care system and by adding a further sensor functionality to said sensor, a second measurement parameter, e.g. a pressure of the flossing fluid, can be measured with the help of the sensor.

According to a further embodiment, the hardware component of the oral care system is a component without a sensor functionality before the software reconfiguration. Thus, the hardware component becomes a sensor due to the software reconfiguration.

The advantage of this embodiment can be that by adding a sensor functionality to a component, which was not a sensor before the software reconfiguration, the overall functionality and usability of the oral care system can be improved. This is achieved by acquiring more data about the oral care procedure performed by the oral care system with the help of the added sensor functionality in order to improve the usability of the oral care system. In addition, the number of components in the oral care system can be reduced since not an additional element has to be provided, which consumes building space and additional resources, but an already existing hardware component can be used and/or recycled for measuring a parameter, e.g. a pressure of a flossing fluid.

As mentioned before, the hardware component of the oral care system is in this embodiment a component and/or a part without a sensor functionality before the software reconfiguration. In other words, the hardware component has no sensor functionality and/or is not capable to measure parameters of the oral care system before the software reconfiguration. After the programmable controller triggers the software reconfiguration and e.g. a software of the hardware component is updated, the hardware component becomes, turns into and/or converts into a sensor due to the software reconfiguration. The term "becomes" means in this embodiment that the hardware component is able to measure a parameter of the oral care system after and/or due to the software reconfiguration triggered by the programmable controller. In addition, the hardware component may become a sensor due to the software reconfiguration and based on the added sensor functionality, as was described hereinbefore. The simplest example is probably a passive responsive material based element (in a mouthpiece or brush head) that is wired (but not used before software update) and then activated and repurposed to a sensor, e.g. to perform brushing pressure/force measurements.

For example, the oral care system comprises a handle and a brush head attachable to the handle. The handle comprises an electric motor with a corresponding control device. The hardware component in this example is the corresponding control device. The control device is configured before the software reconfiguration of the programmable controller for switching the electric motor on and off based on a received signal. After the software reconfiguration, the hardware component, in this example the control device, is configured for measuring the revolutions per minute of the electric motor as well. The hardware component may be capable of transferring the measured revolutions per minute of the electric motor to the programmable controller for improving the oral care procedure performed by the oral care system. In other words, the electric motor and the control device were not a sensor before the software reconfiguration and now, after the software reconfiguration, can be seen as and/or are treated as a sensor.

According to an embodiment, the addition of the sensor functionality to the hardware component is an extension of at least one sensor functionality, in particular an increase of a measuring accuracy and/or of a measuring range, of the hardware component of the oral care system.

The advantage of this embodiment can be that with the help of the extension of the at least one sensor functionality, the cleaning effect of the oral care system can be further improved since more measurement points indicative for the performance of the oral care procedure performed by the oral care system may be available.

As mentioned before, the addition of the sensor functionality to the hardware component is an extension, unlocking and/or initiating of at least one sensor functionality, in particular an increase of a measuring accuracy and/or of a measuring range. Measuring accuracy can mean in this context that the data points per time unit of the sensing, i.e. the measurement, carried out by the hardware component of the oral care system are increased. Alternatively, just a higher time resolution (sample rate) is achieved. The extension of the sensor functionality due to the addition of the sensor functionality can result in an improved detecting rate, since more parameters can be monitored by the oral care system in order to improve the oral care procedure performed by the oral care system. It should be noted that a measuring range can be in this context that an upper limit and/or a lower limit of the measurement range, e.g. 8 bit = 10 V versus 8 bit = 1 V, i.e. a higher sensor resolution (sensitivity) can be raised respectively lowered, thereby allowing one to optimize the sensor resolution or measurement sensitivity required for a specific application or user of the oral care device.

According to an embodiment, the software reconfiguration is configured for triggering an addition of a further type of data analysis, which is performed on data generated by the hardware component of the oral care system with the added sensor functionality.

The advantage of this embodiment can be that by triggering the further data analysis, the generated data can be evaluated more precisely. For example, the further type of data analysis can be an identification of peaks in a measured flow rate of a flossing unit. With the help of the identified peaks, an interproximal space between two teeth can be detected. As outlined above the more reliable detection of interdental space can improve the oral care procedure performed by the oral care system. In particular, the programmable controller can perform the further data analysis of the data generated with the added sensor functionality.

Moreover, the software reconfiguration is configured for triggering and/or starting an addition/ an extension of a further type of data analysis. It is understood in the context of the present invention that the data analysis can be an evaluation of measured data by the added sensor functionality, a sorting of measured data by the added sensor functionality, and/or a transformation of measured data by the added sensor functionality. The data analysis may be performed by the programmable controller, a handheld device, e.g. a smartphone, which may be interconnected to the oral care system. The data analysis may be performed and/or executed on data sets or data elements, which were generated by the added sensor functionality of the hardware component of the oral care system.

According to an embodiment, the oral care system comprises a brush head or a flossing unit and a corresponding support unit, like e.g. a handle for receiving said brush head and/or flossing unit. The code is stored in the brush head or the flossing unit and all software needed to carry out the software reconfiguration is already stored in the support unit, i.e. the handle. Thus, when the brush head/flossing unit is connected to the handle, the code is transmitted to the handle and the software reconfiguration is started without the need for any further internet/data access or the like. The only thing needed for the handle to do the software reconfiguration is the code from the brush head/flossing unit. The latter can be easily purchased by the user depending on which sensor functionality he wishes to apply.

The advantage of this embodiment can be that the code can comprise all information necessary for the software reconfiguration, thereby, forming a self-sufficient object or system, which does not need to download further information, thereby increasing the usability of the oral care system.

However, the code comprises all information and/or data elements necessary, which comprise or define the information relevant to the software reconfiguration for the oral care system for triggering/starting the software reconfiguration.

In a non-limiting example, the code comprises only one data element, which instructs the programmable controller to trigger the software reconfiguration based on the data element, which results in an activation of a provided and so far inactive sensor functionality of the oral care system.

According to an embodiment of the invention, the code comprises a pointer element, e.g. a link. Furthermore, the oral care system is configured for reading out the pointer element. In addition, the oral care system is configured for downloading at least one data element from an online database based on the read out pointer element. Moreover, the oral care system is configured for triggering the software reconfiguration based on the downloaded data element.

The advantage of this embodiment can be that the code comprises only the minimum amount of information necessary to trigger a downloading of the information necessary for the reconfiguration, thereby, the information can be held up to date on an online database for all oral care systems leading to a reduction of maintenance work for the software reconfiguration.

Moreover, the code comprises and/or a contains a pointer element, e.g. a link and/or a hyperlink. It should be understood that in the context of this embodiment the code can be any element which is able to store or provide a pointer element and therefore the term "code" is understood broadly.

Furthermore, the oral care system is configured for reading out and/or receiving the pointer element. Moreover, the oral care system is configured for downloading and/or receiving at least one data element, respectively, an element containing information regarding the software reconfiguration from an online database, for example, a cloud computing storage based on the read out pointer element. Furthermore, the oral care system is configured for triggering, starting and/or initiating the software reconfiguration based on the downloaded data element and/or in combination with the downloaded data element.

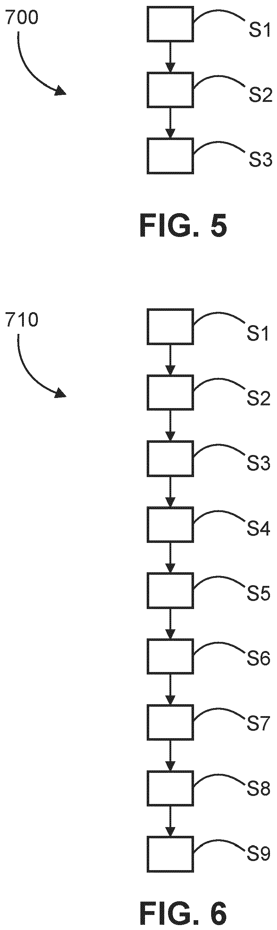

For example, a user of the oral care system, which comprises in this example a handle and a smartphone, can buy a replaceable brushing head for the handle, which contains a code comprising a pointer element, e.g. a hyperlink. The user can then use the smartphone to read out the code. The smartphone receives the pointer element by reading out the code, which can trigger a download of the information necessary for the software reconfiguration of the hardware component of the oral care system from a web server or a cloud server onto the smartphone. The smartphone can then transfer the downloaded information to the programmable controller and subsequently the programmable controller triggers the software reconfiguration for adding the sensor functionality to the oral care system or the hardware component of the oral care system. This will be explained in more detail in view of Figure 6 and the corresponding Figure description.

A further aspect of the invention is a support unit for an oral cleaning tool. The support unit comprises a data reader for receiving a code. In addition, the support unit comprises a programmable controller. The support unit is configured for triggering a software reconfiguration of a software associated with at least one hardware component of the support unit based on the code received by the data reader. Moreover, the programmable controller is configured for changing a control of the hardware component of the support unit based on the triggered software reconfiguration. In addition, the change of the control of the hardware component of the support unit causes an addition of a sensor functionality of the hardware component of the support unit.

In an example, the support unit can be embodied as a handle for receiving a toothbrush and/or a flossing unit, or can be embodied as a mouthpiece.

The advantage of this aspect is that a sensor functionality can be added, as has been described hereinbefore or will be described hereinafter, to the support unit or a hardware component of the support unit with limited extra hassle or effort for the user. The sensor function can be added to the support unit by only reading out the code. Therefore the usability for the user of the support unit can be improved. In addition, the added sensor functionality can be used to further improve an oral care procedure based on the additional data, which can be generated by the additional sensor functionality. Thereby the usability of the support unit for a user may be improved. Moreover, the addition of further sensor functionalities to the support unit may enable further types of oral care procedures since it may be possible to acquire more sensor data of an oral cavity with the additional sensor functionality, e.g. position-based oral care procedures. This can enable a variety of business models and business schemes, which may generate additional revenue for producers of oral care systems. For example, different types of re-attachable cleaning units or oral care elements such as a brush head can be sold by the producers of oral care systems, each type of brush head comprising a different code, indicative for a different sensor functionality to be added to the support unit.

According to an embodiment, the support unit is embodied as:
- a reusable handle for receiving a toothbrush or brush head and/or a flossing unit,
- a reusable mouthpiece configured for being coupled to a replaceable cleaning part, e.g. comprising bristles.

The advantage of this embodiment can be that the support unit can be used for oral cleaning procedure, thereby, with the help of the added sensor functionality, the usability and ergonomics of the support unit can be further improved, as outlined before.

As was explained before, the "support unit" of a mouthpiece is the reusable part of the mouthpiece typically comprising the drive mechanism. Unless the mouthpiece is to be replaced completely upon wear-out, the reusable part is to be coupled to a replaceable cleaning part, e.g. comprising bristles. Thus, a reusable mouthpiece is configured for being coupled to a replaceable cleaning part, e.g. comprising bristles. The "support unit" of a handheld oral care system is understood herein as a handle.

Moreover, the support unit is embodied, comprises and/or consists of a handle for a toothbrush/brush head and/or a flossing unit. The handle may comprise a power train and a power supply for tooth brushing and tooth flossing, e.g. an electric motor, a battery and/or a fluid reservoir and actuator.

According to an embodiment, a surface of the support unit comprises the code.

This embodiment has the advantage that a user of the support unit can easily recognize which type of code is associated with said support unit based on the code located on the surface of the support unit, e.g. the outer surface of the support unit, which faces to the user and hence can be read out by e.g. a QR code reader without dismantling the support unit.

Moreover, the code or an element indicative for the code is located on a surface, in particular an outer surface, of the support unit such that the data reader can read out the code and/or the user of the support unit can identify the type of support unit. The code can be in this context e.g. a bar code, a QR code, a color code and/or any other form of code suitable for said purpose.

For example, when the user of the support unit is about to select a brush head, which comprises the code, the user can, in this example, pick a brush head from a variety of different types of brush head. Each type of brush head may have a different color code on the outer surface of the brush head, wherein each color code is indicative for the sensor functionality, which is added to the support unit. Therefore, the user easily identifies which brush head he has to pick in order to add a specific sensor functionality to the support unit based on the color code on the outer surface of the support unit.

According to an embodiment, the support unit is accommodated in a covering box. The covering box comprises a marker element indicative for the type of sensor functionality, which is added to the support unit.

This embodiment may have the advantage that a user of the support unit can easily recognize based on the marker element located on the covering box, which sensor functionality is added to the support unit.

For example, the support unit, e.g. a brush head comprising the code, is located in a covering box when the support unit is still in a store. The user can then select the type of brush head he wants to buy based on the marker element on the covering box. The marker element on the covering box may indicative for the type of code that is comprised in the brush head located inside of the covering box. The marker element can be a color code, text or any other form of indicator, which is suitable for that purpose.

A further aspect of the invention is a method for adding a sensor functionality to an oral care system. The method comprises the steps of:
- receiving a code by a data reader of the oral care system,
- triggering a software reconfiguration of a software associated with at least one hardware component of the oral care system based on the code received by the data reader,
- changing a control of the hardware component of the oral care system based on the triggered software reconfiguration, and
- wherein the change of the control of the hardware component of the oral care system causes an addition of a sensor functionality to the hardware component of the oral care system.

The advantage of this aspect is that a sensor functionality can be added to the oral care system or a hardware component of the oral care system by performing said steps of the method. This may increase the usability and functionality of the oral care system for the user. In particular, additional data can be generated with the help of the added sensor functionality, which may be used for improving an oral care procedure. For example, with the additional data generated by the added sensor functionality an occlusal surface of teeth can be detected and a flossing procedure can be improved based on the detected occlusal surface by adapting the amount of flossing fluid emitted. This can enable a variety of business models and business schemes, which may generate additional revenue for producers of oral care systems.

The method may be carried out by the oral care system, a support unit, a handheld device, e.g. a smartphone, which may be interconnected with an oral care system and/or a support unit, as described before and hereinafter.

According to an embodiment, the method further comprises the step of
- adding an additional sensor functionality to the hardware component with at least one sensor functionality of the oral care system before the software reconfiguration based on the change of the control of the hardware component.

The advantage for this embodiment can be that by adding the additional sensor functionality to the hardware component, which already comprises a sensor functionality, the data generated by the already existing sensor functionality can be double-checked with the added sensor functionality and therefore the effectiveness of the oral care procedure performed by the oral care system can be improved.

Moreover, the oral care system comprises a hardware component, which has at least one sensor functionality and/or the capability to measure a parameter relevant for the oral care procedure, wherein a further sensor or additional sensor functionality can be added to said hardware component.

For example, the hardware component is a sensor for measuring pressure of a flossing fluid. By adding the additional sensor functionality to the hardware component not only the pressure of the flossing fluid but also the flow of the flossing fluid can be measured. Further examples of adding a sensor functionality to a hardware component, which already comprises a sensor functionality before the software reconfiguration are described before and hereinafter.

According to an embodiment, the method further comprises the step of:
- adding an additional sensor functionality to the hardware component without a sensor functionality of the oral care system before the reconfiguration based on the change of the control of the hardware component.

The advantage of said embodiment can be that a total number of components in an oral care system and/or a support unit can be reduced, since the functionality of hardware components can be extended and therefore no further hardware component needs to be integrated into the oral care system or the support unit for adding a sensor functionality.

Moreover, the oral care system comprises a hardware component, which does not comprise a sensor functionality and/or has not the capability to generate data about a parameter of the oral care system and/or the support unit before the software reconfiguration. After the software reconfiguration based on the received code, a sensor functionality of said hardware component of the oral care system is unlocked and/or activated and, thereby, further measurement values, e.g. revolutions per minute of an electric motor as described before, can be acquired for improving the oral care procedure.

According to an embodiment, the method further comprises the step of:
- triggering an addition of a further type of data analysis, which is performed on data generated by the hardware component of the oral care system with the added sensor functionality.

The advantage of said embodiment can be that an additional result, e.g. the detection of occlusal surfaces, can be extracted from the data generated by the added sensor functionality with the further type of data analysis. With the help of the additional result, the oral care procedure can be further improved and the usability for the user can be increased.

Moreover, the software reconfiguration triggers and/or initiates an adaption and/or extension of the performance of the data analysis, which is run and/or performed on data generated by at least one hardware component of the oral care system with the added sensor functionality.

For example, the added sensor functionality is a measurement of a flow of the flossing fluid in the conduit of an oral care system. The further type of data analysis may identify peaks in the flow of the flossing fluid over time and can detect interdental spaces based on the identified peaks. With the help of the detected interdental spaces, the flossing procedure can be adapted to be more gum friendly for example.

According to an embodiment, the method further comprises the steps of:
- reading out a pointer element from a code,
- downloading at least one data element from an online database based on the read out pointer element, and
- triggering a software reconfiguration based on the downloaded data element.

The advantage of said embodiment can be that the maintenance for the updating of software reconfiguration data can be reduced since all information relevant is stored in the online database and thereby, only one software package has to be adapted.

Moreover, the code comprises a link which directs the oral care system towards an online database from which at least one data element can be downloaded, as described before and hereinafter. The oral care system can perform the software reconfiguration based on the downloaded data element.

A further aspect of the invention is a computer program, which instructs a processing unit to perform the steps of the method explained before and hereinafter. Another aspect of the invention is the use of an oral care system configured to allow an addition of a sensor functionality.

All disclosures as described here in relation to any aspect of the invention apply equally to all other aspects of the invention. In the following, the examples and embodiments of the invention are described with reference to the Figures.

### BRIEF DESCRIPTION OF THE DRAWINGS

Figure 1 shows an oral care system according to an embodiment of the present invention.
Figure 2 shows a support unit according to an embodiment of the present invention.
Figure 3 shows a support unit according to an embodiment of the invention.
Figure 4 shows a support unit according to an embodiment of the present invention.
Figure 5 shows a diagram illustrating the method according to an embodiment of the present invention.
Figure 6 shows a diagram illustrating the method according to an embodiment of the present invention.

### DETAILED DESCRIPTION OF EMBODIMENTS

Figure 1 shows the oral care system 100 configured to allow the addition of the sensor functionality to the oral care system 100. The oral care system 100 comprises the data reader 102 for receiving the code 200. Furthermore, the oral care system 100 comprises the programmable controller 104. The oral care system 100 is configured for triggering the software reconfiguration of the software associated with at least one hardware component 106 of the oral care system 100 based on the code 200 received by the data reader 102. Moreover, the programmable controller 104 is configured for changing the control of the hardware component 106 of the oral care system 100 based on the triggered software reconfiguration. In addition, the change of the control of the hardware component 106 of the oral care system 100 causes the addition of the sensor functionality to the hardware component 106 of the oral care system 100.

The advantage of this oral care system 100 as described before and hereinafter, is that an additional sensor functionality can be added to the oral care system 100 or a hardware component 106 of the oral care system 100 and thereby, the oral care procedure performed by the oral care system 100 can be improved which will lead to an increase of usability for a user of the oral care system 100.

Figure 1 shows the oral care system 100, which comprises the data reader 102, the programmable controller 104, a hardware component 106, the hardware component with the sensor functionality before the software reconfiguration 108, and the hardware component without the sensor functionality before the software reconfiguration 110. The data reader 102 is configured for receiving the code 200. The code 200 may comprise the pointer element 202, which refers to an online database 300. The programmable controller 104 may change the control of the hardware component 106 based on the triggered software reconfiguration initiated by the oral care system 100 based on the code 200 received by the data reader 102. The hardware component 106 can be a component and/or a part of the oral care system 100, which may comprise the sensor functionality or does not comprise the sensor functionality. In case the hardware component comprises the sensor functionality before the software reconfiguration 108, said hardware component 108 is capable of generating measuring data before the software reconfiguration. In addition, the hardware component can be the component without the sensor functionality before the software reconfiguration 110, wherein said hardware component 110 is not able to generate measuring data before the software reconfiguration.

For example, the hardware component 106 is the hardware component with the sensor functionality before the software reconfiguration 108. Said hardware component 108 is for example a fluid pressure sensor, which is capable of measuring the pressure of the flossing fluid in the flossing conduit. The data reader 102 is configured for receiving the code 200. The code 200 can be transferred from the data reader 102 to the programmable controller 104. The programmable controller 104, e.g. a processor unit interconnected with an actuator and a data storage, can trigger the software reconfiguration based on the received code 200. Furthermore, the programmable controller 104 can be configured for establishing the connection between the oral care system 100 and the online database 300 for downloading required information for the software reconfiguration from the online database 300 based on the received code 200. The connection between the oral care system 100 and the online database 300 can be established by the programmable controller 104 via a handheld device, e.g. a smartphone, which is connected via Bluetooth to the oral care system 100 and is connected to the online database 300 via Wi-Fi. In this case, the code 200 can comprise the pointer element 202, e.g. a link, which gives the programmable controller 104 the instruction to download the required information, as described above. After the software reconfiguration, an additional sensor functionality is added to said hardware component 108 and thereby the hardware component 108 gains the sensor functionality, e.g. the capability to measure the flow of the flossing fluid in the flossing conduit of an oral care device.

Figure 2 shows an oral care system with the support unit 400, which is mechanically coupled to the mouthpiece 416, which receives the dental arch of the user. Mouthpiece 416 is a full or half arc-shaped cleaning element. Moreover, the support unit 400 of mouthpiece 416 is the reusable part and comprises the drive mechanism for the cleaning and/or flossing functionalities. The support unit 400 comprises the data reader 402, the programmable controller 404 and at least one hardware component 406. The data reader 402 is configured for receiving the code 200 from the mouthpiece 416, wherein the support unit 400 is configured for triggering the software reconfiguration based on the received code 200 and with no additional data or internet access. The programmable controller 404 of the support unit 400 is configured for changing control of the hardware component 406 of the support unit 400 based on the triggered software reconfiguration.

In an embodiment of Figure 2, the support unit 400 and the mouthpiece 416 are for cleaning (brushing and flossing teeth) or soft tissue treatment, and thereby form an independent oral care system/device. The mouthpiece 416 might be completely insertable into an oral cavity of the user. The mouthpiece 416 comprises at least one hardware component 406, which can be any component for treating an oral cavity, e.g. a light unit for gum tissue treatment. Furthermore, in this embodiment, the hardware component 406 comprises also a light sensor, which is capable of measuring the relevant parameter for the treatment of the oral cavity. Based on the software reconfiguration performed by the programmable controller 404, the sensor functionality of measuring the light reflected from the teeth by the light sensor is added to the oral care system shown in Figure 2. It is to be noted that of course also other additions of sensor functionalities could be added to the oral care system shown in Figure 2, as was explained in detail before and will be explained hereinafter.

Figure 3 shows a support unit embodied as the handle 500 for receiving a brush and/or a flossing unit (not shown) or an arc-shaped cleaning element. The handle 500 comprises the data reader 402 for receiving the code 200. In addition, the handle 500 comprises the programmable controller 404 which is configured for triggering the software reconfiguration of the software associated with the at least one hardware component 406 with or without sensor functionality of the handle 500. Furthermore, the handle 500 may comprise the power train 408 (or a fluid reservoir and a fluid actuator; both not shown) which is configured for powering the brush head and/or the flossing unit (see Figure 4) of the support unit 500, i.e. the handle 500. In addition, the handle 500 may comprise an adapter element 410, which is configured for transferring the power, respectively torque, and sensor signals from the brush head or flossing unit 600 to the handle 500 and/or from the handle 500 to the attachable cleaning unit 600, i.e. brush head and/or flossing unit 600.

Figure 4 shows the attachable cleaning unit 600 embodied as the brush head, which is attachable to a handle, like e.g. handle 500. The attachable cleaning unit 600, e.g. a brush head and/or flossing head, comprises the data reader 402, which is configured for receiving the code 200. In addition, the attachable cleaning unit 600 comprises the programmable controller 404. In addition, the attachable cleaning unit 600 comprises the hardware component 406, e.g. a sensor and/or a component without a sensor functionality. In addition, the attachable cleaning unit comprises element 412, which finally interacts with the teeth for carrying out the brushing of the teeth and/or flossing of the teeth. In addition, the attachable cleaning unit 600 can comprise the device 414 for generating sensor data, e.g. a flow and/or pressure sensor, so that the device 414 forms the hardware component of the attachable cleaning unit 600, to which the sensor functionality is added according to the present invention.

Figure 5 shows the diagram illustrating the steps of the method 700 for adding the sensor functionality to an oral care system. The method comprises the step of receiving S1 the code 200 by the data reader 102 of the oral care system 100. Furthermore, the method 700 comprises the step of triggering S2 the software reconfiguration of the software associated with at least one hardware component 106 of the oral care system 100 based on the code 200 received by the data reader.

Furthermore, the method 700 comprises the step of changing S3 the control of the hardware component 106 of the oral care system 100 based on the triggered software reconfiguration. In addition, the change of the control of the hardware component 106 of the oral care system 100 causes an addition of the sensor functionality to the hardware component 106 of the oral care system 100.

For example, the data reader 102, e.g. a RFID-reader, receives the code 200 from a RFID transponder. The data reader can be configured for transferring the code 200 to the programmable controller 104, as described before and herein after. The programmable controller 104, e.g. a processor unit, triggers the software reconfiguration, e.g. a software update, of the software associated with the hardware component 106, e.g. the fluid pressure sensor for measuring the pressure of the flossing fluid in the flossing conduit. Due to the software reconfiguration the sensor functionality, e.g. measuring the flow of the flossing fluid in the flossing conduit, is added to said hardware component 106.

Figure 6 shows the further method 710 for adding the sensor functionality to an oral care system. The further method 710 comprises the step of receiving S1 the code 200, e.g. reading out the QR-tag with the camera as data reader 102, triggering the software reconfiguration S2, e.g. a software update performed by the programmable controller 104, and changing S3 the control of the hardware component 106, e.g. adding the sensor functionality to said hardware component 106, as described before and herein after. Furthermore, the further method 710 comprises the step adding S4 an additional sensor functionality component 106 with at least one sensor functionality of the oral care system 100 before the software reconfiguration based on the change of the control of the hardware component 106.

For example, an interdental space detection sensor can be upgraded by software reconfiguration to enable also occlusal tooth surface sensing. Such an oral care system is configured for detecting whether during the displacement of the cleaning device in the user's mouth over a critical, pre-defined length no interdental spaces are detected. In such a case the oral care system is configured to assume that the cleaning device is at an occlusal surface.

Furthermore, the further method 710 may comprise the step of adding S5 an additional sensor functionality to the hardware component 106 without the sensor functionality of the oral care system 100 before the software reconfiguration based on the change of the control of the hardware component 106.

For example, the hardware component 106 is not capable of measuring the parameter of the hardware component 106 before the software reconfiguration. After the software reconfiguration the hardware component 106 is capable of measure the parameter, e.g. revolution per minute, of the hardware component 106, as described before and herein after.

Moreover, the further method 710 may comprise the step of triggering S6 an addition of the further type of data analysis, which is performed on data generated by the hardware component 106 of the oral care system 100 with the added sensor functionality.

In a non-limiting example, the hardware component 106 is the flow sensor for measuring the flow of the flossing fluid in the flossing conduit. In this example, the further data analysis can identify peaks in the flow of the flossing fluid over time and based on the identified peaks the oral care procedure can be further improved as outline above.

The further method 710 may comprise the steps of reading out S7 the pointer element 202 from the code 200. Furthermore, the further method 710 may comprise the step of downloading S8 at least one data element from an online database 300 based on the read out pointer element 202. In addition, the further method 710 may comprise the step of triggering S9 the software reconfiguration based on the downloaded data element.

For example, the code 200 is the QR-tag comprising the pointer element 202, which is the link stored in the QR-tag. The programmable controller 104 can establish the connection to an online database 300, e.g. directly or via a handheld device like a smartphone, as described before and herein after. The programmable controller 104 can download all information necessary for the software reconfiguration, e.g. a data element for a software update, from the online database 300 via the established connection between the programmable controller 104 and the online database 300. After the download is complete, the programmable controller 104 can trigger the software reconfiguration based on all the downloaded information for adding the sensor functionality to the hardware component 106.

The reference symbols used in the Figures are listed in a summary form in the list of reference symbols. In principal, identical parts are provided with the same reference symbols in the Figures.

Where an indefinite or definite article is used when referring to a singular noun, e.g. "a", "an" or "the", this includes a plurality of that noun unless something else is specifically stated. It is to be understood that terms used are interchangeable and under appropriate circumstances and that the embodiments of the invention described herein are capable of operation in other sequences than described or illustrated herein.

### REFERENCE SIGNS

100 oral care system
102 data reader
104 programmable controller
106 hardware component
108 hardware component with a sensor functionality before software reconfiguration
110 hardware component without a sensor functionality before software reconfiguration
200 code
202 pointer element
300 online database
400 support unit
402 data reader
404 programmable controller
406 hardware component
408 power train
410 adapted element
412 element for brushing teeth and/or flossing teeth
414 device for generating sensor data
500 handle
600 attachable cleaning unit
700 method
710 further method
S1 receiving
S2 triggering
S3 changing
S4 adding
S5 adding
S6 triggering
S7 reading out
S8 downloading
S9 triggering

## Claims

1. An oral care system (100) configured to allow an addition of a sensor functionality to the oral care system (100), the oral care system (100) comprising:
a data reader (102) for receiving a code (200),
a programmable controller (104),
wherein the oral care system (100) is configured for triggering a software reconfiguration of a software associated with at least one hardware component (106) of the oral care system (100) based on the code (200) received by the data reader (102),
wherein the programmable controller (104) is configured for changing a control of the hardware component (106) of the oral care system (100) based on the triggered software reconfiguration, and
wherein the change of the control of the hardware component (106) of the oral care system (100) causes an addition of a sensor functionality to the hardware component (106) of the oral care system (100).

2. The oral care system according to claim 1,
wherein the addition of the sensor functionality to the hardware component (106) is an implementation of a sensor functionality that is added to an already existing sensor functionality of the hardware component (108) of the oral care system (100).

3. The oral care system according to any of the preceding claims,
wherein the hardware component (106) of the oral care system is a component (110) without a sensor functionality before the software reconfiguration,
wherein the hardware component (106) becomes a sensor due to the software reconfigurati on.

4. The oral care system according to any of the preceding claims,
wherein the addition of the sensor functionality to the hardware component (106) is an extension of at least one sensor functionality, in particular an increase of a measuring accuracy and/or of a measuring range, of the hardware component (106) of the oral care system (100).

5. The oral care system according to any of the preceding claims,
wherein the software reconfiguration is configured for triggering an addition of a further type of data analysis, which is performed on data generated by the hardware component (106) of the oral care system (100) with the added sensor functionality.

6. The oral care system according to any of the claims 1 to 5,
wherein the code (200) comprises a pointer element (202), e.g. a hyperlink,
wherein the oral care system (100) is configured for reading out the pointer element (202),
wherein the oral care system (100) is configured for downloading at least one data element from an online database (300) based on the read out pointer element (202), and
wherein the oral care system (100) is configured for triggering the software reconfiguration based on the downloaded data element.

7. A support unit (400) for an oral cleaning tool, the support unit (400) comprising:
a data reader (402) for receiving a code (200),
a programmable controller (404),
wherein the support unit (400) is configured for triggering a software reconfiguration of a software associated with at least one hardware component (406) of the support unit (400) based on the code (200) received by the data reader (402),
wherein the programmable controller (404) is configured for changing a control of the hardware component (406) of the support unit (400) based on the triggered software reconfiguration, and
wherein the change of the control of the hardware component (406) of the support unit (400) causes an addition of a sensor functionality to the hardware component (406) of the support unit (400).

8. The support unit according to claim 7,
wherein the support unit (400) is embodied as:
- a reusable handle (500) for receiving a toothbrush or brush head and/or a flossing unit,
- a reusable mouthpiece (600) configured for being coupled to a replaceable cleaning part.

9. A method (700) for adding a sensor functionality to an oral care system (100), the method (700) comprising the steps of:
receiving (S 1) a code (200) by a data reader (102) of the oral care system (100),
triggering (S2) a software reconfiguration of a software associated with at least one hardware component (106) of the oral care system (100) based on the code (200) received by the data reader (102),
changing (S3) a control of the hardware component (106) of the oral care system (100) based on the triggered software reconfiguration, and
wherein the change of the control of the hardware component (106) of the oral care system (100) causes an addition of a sensor functionality to the hardware component (106) of the oral care system (100).

10. The method according to claim 9, the method further comprising the step of:
adding (S4) an additional sensor functionality to the hardware component (106) with at least one sensor functionality of the oral care system (100) before the software reconfiguration based on the change of the control of the hardware component (106).

11. The method according to any of the claims 9 to 10, the method further comprising the step of:
adding (S5) an additional sensor functionality to the hardware component (106) without a sensor functionality of the oral care system (100) before the software reconfiguration based on the change of the control of the hardware component (106).

12. The method according to any of the claims 9 to 11, the method further comprising the step of:
triggering (S6) an addition of a further type of data analysis, which is performed on data generated by the hardware component (106) of the oral care system (100) with the added sensor functionality.

13. The method according to any of the claims 9 to 12, the method further comprising the steps of:
reading out (S7) a pointer element (202) from a code (200),
downloading (S8) at least one data element from an online database based on the read out pointer element, and
triggering (S9) the software reconfiguration based on the downloaded data element.

14. A computer program, which instructs when executed a processor unit to perform the steps of the method according to any of the claims 9 to 13.
